# EUROPEAN PATENT APPLICATION

(11) **EP 2 716 942 A1**
(43) Date of publication of application: **09.04.2014**
(21) Application number: 12789743.7
(22) Date of filing: 24.05.2012
(51) Int. Cl.: F16J 15/10

(54) **SEALING STRUCTURE**

(30) Priority: 26.05.2011 JP 2011117710
(71) Applicant: Uchiyama Manufacturing Corp., Okayama-shi Okayama 702-8004 (JP)
(72) Inventor: MORI, Dai, Akaiwa-shi Okayama 701-2221 (JP)
(74) Representative: Vossius & Partner
(86) International application number: PCT/JP2012/063342
(87) International publication number: WO 2012/161258

(57) **Abstract**

A sealing structure for sealing a space between two members by mounting a gasket in a groove portion provided on a surface to be sealed of one member of the two members. The groove portion has a first groove portion formed on an inner side in the depth direction and a second groove portion formed on an opening side of the groove portion, the second groove portion being larger in width than the first groove portion and having inner walls facing to each other in substantially parallel. The gasket has a gasket body having an insertion portion to be inserted in the first groove, and a projecting portion which is larger in width than the gasket body and has a curved portion facing a surface to be sealed of the other member. The maximum width of the projecting portion is larger than width of the first groove portion and is smaller than width of the second groove portion.

## Description

### Technical Field

The present invention relates to a sealing structure for sealing a space, for example, between a cylinder head and an intake manifold or between a cylinder head and a head cover in a combustion engine with a gasket.

### Background Art

Sealing structures for sealing a space between the above-mentioned two members with a gasket have been conventionally proposed, for example, the sealing structure as shown in Patent Literature 1 mentioned below.

Patent Literature 1 discloses the seal structure in the casing housing the solenoid drive mechanism of the electromagnetic control valve of the brake fluid pressure control device. In the sealing structure, the annular seal groove is formed on the assembly seal surface side of the first configuration unit constituting the casing. The annular seal groove has the narrow groove portion on the bottom side and the wide groove portion on the opening side. The section of the annular seal member attached to the annular seal groove is formed almost ellipse in such a manner that the length of the longitudinal direction is larger than the depth of the annular seal groove. When the second configuration unit is assembled to the first configuration unit under the condition that the annular seal member is attached to the annular seal groove, the annular seal member is filled under compression in the narrow groove portion and the pressed and squeezed tip portion projecting further than the opening edge of the annular seal groove of the annular seal member is housed in the wide groove portion. Thus the annular seal member is prevented from leaning at the time of assembling and the annular seal member is prevented from being bitten between the first configuration unit and the second configuration unit.

### Citation List

### Patent Literature

PTL 1: Japanese Patent Publication (not examined) No. 2001-263496

### Summary of Invention

### Technical Problem

In the sealing structure disclosed in PTL 1, the annular seal member in a large area contacts the inner wall of the narrow groove portion. When one of the two members is thermally deformed by heat, the following problems are expected. When heat is applied after the annular seal member is assembled between the two members and one of the two members is thermally deformed, the distance between the seal surfaces of the both members becomes large. At this time, when the contact area of the annular seal member relative to the inner wall of the narrow groove portion is large as mentioned above, the friction resistance caused between the seal member and the inner wall of the narrow groove portion becomes large. Therefore, the annular seal member has difficulty in elastic deformation following the change in the distance between the seal surfaces, thereby deteriorating the sealing performance between the seal surfaces. The depth of the narrow groove portion may be made small in order to reduce the contact area of the annular seal member relative to the inner wall of the narrow groove portion. However, in such a case, the ratio of the projecting portion of the annular seal member out of the narrow groove portion becomes large. Accordingly, the annular seal member has difficulty in regulating leaning in the inner wall of the narrow groove portion. Therefore, the annular seal member is expected to easily lean when the first configuration unit and the second configuration unit are assembled.

The present invention is proposed in view of the above-mentioned problems and has an object to provide a sealing structure capable of preventing a gasket from leaning at the time of assembling the two members and capable of keeping sealing performance when at least one of the two members is thermally deformed.

### Solution to Problem

The present invention provides a sealing structure for sealing a space between two members by mounting a gasket in a groove portion provided on a surface to be sealed of one member of the two members. The groove portion has a first groove portion formed on an inner side in the depth direction and a second groove portion formed deep on an opening side of the groove portion, the second groove portion being larger in width than the first groove portion and having inner walls facing to each other in substantially parallel. The gasket has a gasket body having an insertion portion to be inserted in the first groove, and a projecting portion which is larger in width (dimension along the direction perpendicular to the depth direction of the groove portion) than the gasket body and has a curved portion facing a surface to be sealed of the other member. The maximum width (the above-mentioned dimension) of the projecting portion is larger than the width (the above-mentioned dimension) of the first groove portion and is smaller than the width (the above-mentioned dimension) of the second groove portion.

In the present invention, when the gasket is mounted in the groove portion of one member, the insertion portion of the gasket body is inserted into the first groove portion. When the two members are assembled in such a manner that each surface to be sealed is sealed with the gasket interposed, the gasket is compressed in the depth direction, the insertion portion is deformed while being enlarged in the width direction, and the insertion portion elastically contacts the bottom wall of the first groove portion. Even if the insertion portion leans when the two members are thus assembled, the insertion portion abuts the opening edge portion or the inner wall of the first groove portion and is prevented from leaning. The gasket has the projecting portion of which maximum width is larger than the width of the gasket body, so that the projecting portion is deformed while being enlarged in the width direction in case of the above-mentioned assembly. Even if the gasket leans, the projection portion abuts the open edge portion or the inner wall of the second groove portion and the gasket is prevented from leaning. When the two members are assembled, the gasket is prevented from leaning by both the first groove portion and the second groove portion, thereby the gasket hardly leans regardless of the depth of the first groove portion and that of the second groove portion. The maximum width of the projecting portion is larger than the width of the main gasket body and the width of the first groove portion and is smaller than the width of the second groove portion, so that the gasket body itself is non-contact or elastically contacts with less force with the inner wall of the second groove portion. The contact area of the gasket to the inner wall of the groove portion does not extend to the whole area of the gasket, thereby the friction resistance with the inner wall of the groove portion is not large. Even if the distance between the surfaces to be sealed of the two members is changed because of thermal deformation of at least one of the two members, the gasket is able to be elastically deformed following the change in the distance between the surfaces to be sealed by the restoring elasticity. Elastic contact between the projecting portion and the surface to be sealed facing the projecting portion is able to be kept, thereby keeping the sealing performance. Furthermore, the portion of the projecting portion facing the surface to be sealed is curved, so that abutment of the curved portion and the surface to be sealed at the time of assembly is changed from a line contact condition to a wide contact condition. The compression force caused at the time of assembling the two members is dispersively applied on the curved portion, and the compression force is less concentrated on the gasket body compared with the curved portion with small curvature radius. In case that both members are tried to be assembled under the condition that the surfaces to be sealed of the both members are not parallel, the force in the direction to lean the gasket becomes small. Namely, even if the two members are obliquely assembled, the gasket hardly leans.

In the sealing structure of the present invention, the insertion portion is formed so as to be tapered in such a manner that the width gradually becomes smaller toward the tip end. In such a structure, when the insertion portion is inserted into the first groove portion so as to be in a compressed condition, the first groove portion is hardly over filled, thereby reducing compression inhibition in the insertion portion.

In the sealing structure of the present invention, at least one of the two members is made of resin. The resin member is easily deformed by heat. Even if the distance between the surfaces to be sealed of the two members changes by thermal deformation as mentioned above, the gasket is elastically deformed following the change, thereby keeping the sealing performance on the surface to be sealed. Specifically, the sealing structure of the present invention is applied between the cylinder head and the intake manifold or between the cylinder head and the head cover, wherein one of the two members is usually made of resin, the sealing performance is not deteriorated by the thermal deformation. Therefore, the present invention is beneficially applied between the cylinder head and the intake manifold or between the cylinder head and the head cover.

In the sealing structure of the present invention, the height (dimension along the depth direction of the groove portion) of the gasket body is larger than the height (the above-mentioned dimension) of the projecting portion. Accordingly, by the above-mentioned relation, the ratio of the gasket body to the entire gasket becomes large and the contact area of the gasket to the inner wall of the groove portion becomes relatively small. The gasket becomes easily deformed in an elastic manner further following the change in the distance between the surfaces to be sealed of the two members by thermal deformation. Specifically, the present invention is effective in case that the space between the two members is sealed wherein at least one member is made of a material easily deformable by heat such as synthetic resin.

In the sealing structure of the present invention, the height of the gasket body is larger than height of the projecting portion. The insertion portion of the gasket body is smoothly inserted into the first groove portion by the above-mentioned dimensional relation.

### Advantageous Effects of Invention

In the sealing structure of the present invention, the gasket is inhibited from leaning at the time of assembling two members and the sealing performance is able to be kept even if at least one of the two members is thermally deformed.

### Brief Description of Drawings

Fig.1 is a sectional view of the essential part showing fastening condition of two members to be sealed to which the sealing structure of the present invention is applied.
Fig.2 is an enlarged sectional view of the area "Z" in Fig. 1 and shows one embodiment of a gasket used for the sealing structure of the present invention, wherein the gasket is provided between the two members.
Fig.3 is a sectional view showing the sealing structure wherein the two members are assembled by fastening with the gasket of above-mentioned embodiment interposed.
Fig.4 is a partially broken perspective view of the gasket of the above-mentioned embodiment.
Fig.5 is a sectional view showing compression process of the gasket when the two members are obliquely assembled using the gasket of the above-mentioned embodiment.
Fig.6 is a sectional view showing compression process of the gasket when the two members are obliquely assembled using a gasket of a comparative example.
Fig.7 is a partially broken perspective view of a gasket of the other embodiment.

### Description of Embodiments

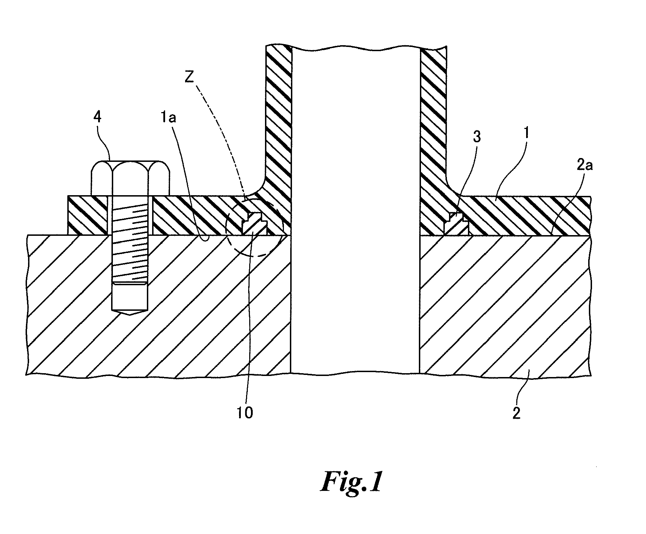

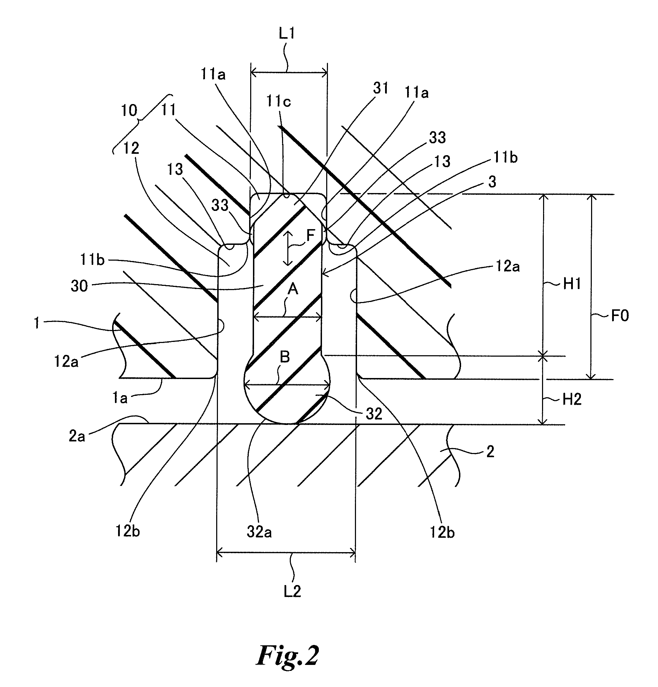

An embodiment of the present invention is explained based on the drawings. Fig.1 to Fig.3 show a sealing structure for sealing a space between an intake manifold (one member) 1 and a cylinder head (the other member) 2 in an internal combustion engine with a gasket 3. The intake manifold 1 is constituted with a molded body of synthetic resin and is provided with a groove portion 10 for mounting the gasket 3 on a surface to be sealed 1a. The surface to be sealed 1a is annularly formed and the groove portion 10 is annularly formed in a convex manner along the circumferential direction of the annular surface to be sealed 1 a. The groove portion 10 has a first groove portion 11 formed deep on an inner side in the depth direction F (the direction perpendicular to the surface to be sealed 1a) and a second groove portion 12 on an open side of the first groove portion 11, wherein the second groove portion 12 is larger in width than the first groove portion 11 and has inner walls 12a, 12a facing to each other substantially in parallel. As shown in Fig.2, the second groove portion 12 extends from the first groove portion 11 via a stepped portion 13 in such a manner that the width L2 becomes larger than the width L1 of the first groove portion 11. The first groove portion 11 and the second groove portion 12 are formed symmetric about the center line along the depth direction F.

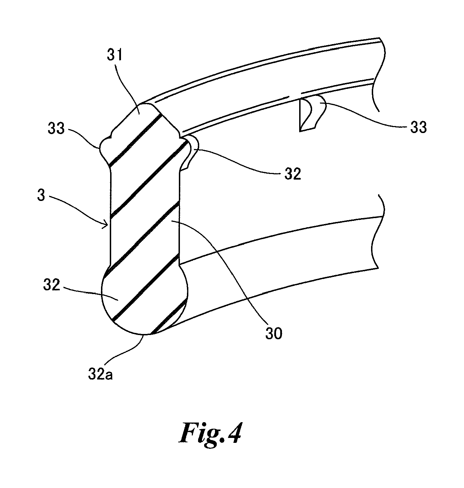

The gasket 3 is constituted with a vulcanized molded body made of rubber such as FKM, NBR, H-NBR, EPDM, CR, ACM, AEM, VMQ, or FVMQ and is formed annular so as to be fit in the annular groove portion 10. As also shown in Fig.4, the gasket 3 has a main gasket body 30 having an insertion portion 31 to be inserted into the first groove portion 11 and a projection portion 32 having a curved surface 32a which is larger in width than the main gasket body 30 and faces the surface to be sealed 2a of the cylinder head 2. The main gasket body 30 has a portion of which section is rectangular and the insertion portion 31 on one end side in the longitudinal direction, the insertion portion 31 being tapered (in the form of mountain) in such a manner that the width is gradually reduced toward the tip end. On the other end side in the longitudinal direction of the main gasket body 30, the projection portion 32 is integrally formed, the maximum width B being larger than the width A (size in the width direction) of the main gasket body 30. The sectional shape of the projection portion 32 in the figure is circular and the maximum width B substantially corresponds to the diameter of the circular projection portion 32.

The width A of the main gasket body 30 is smaller than the width L1 (width in the direction perpendicular to the depth direction F) of the first groove portion 11. The maximum width B of the projection portion 32 is larger than the width L1 of the first groove portion 11 and is smaller than the width L2 (as mentioned above) of the second groove portion 12. The height H1 (height along the depth direction F) of the main gasket body 30 including the insertion portion 31 is larger than the height H2 (height along the depth direction F) of the projection portion 32. The height H1 of the main gasket body 30 is smaller than the depth F0 of the groove portion 10 and the total height of H1 and H2 of the gasket 3 is larger than the depth F0 of the groove portion 10. A plurality of drop-preventing projections 33 are formed on both outer sides of a portion of the main gasket body 30 extending to the insertion portion 31 at a fixed interval along the circumferential direction. Position and height of the drop-preventing projections 33 are determined so as to elastically contact in a compressed condition with the inner walls 11a, 11 a around open edges 11b, 11b of the first groove portion 11 when the insertion portion 31 is inserted into the first groove portion 11, to be mentioned later.

Next explained is how to construct the sealing structure for sealing a space between the two members 1, 2 with the gasket 3 interposed between surfaces to be sealed 1a, 2a of the intake manifold 1 and the cylinder head 2. As shown in Fig.2, the insertion portion 31 of the gasket 3 is inserted to the first groove portion 11 of the groove portion 10 formed on the surface to be sealed 1a of the intake manifold 1. The insertion is executed in such a manner that the drop-preventing projections 33 formed on both outer sides of the main gasket body 30 are compressed in the direction of the center of the width of the main gasket body 30 and the top of the insertion portion 31 abuts or comes close to a bottom wall 11c of the first groove 11, thereby the gasket 3 being mounted in the groove portion 10. When the insertion portion 31 is inserted into the first groove portion 11 and the gasket 3 is mounted in the groove portion 10, the drop-preventing projections 33 elastically contact, in a stretched manner, both inner walls 11a, 11a of the first groove portion 11 by compression reaction force. Therefore, even when the surface to be sealed 1a of the intake manifold 1 faces down, the gasket 3 does not drop and is safely kept in the groove portion 10 because of the stretching elastic contact force of the drop-preventing projections 33.

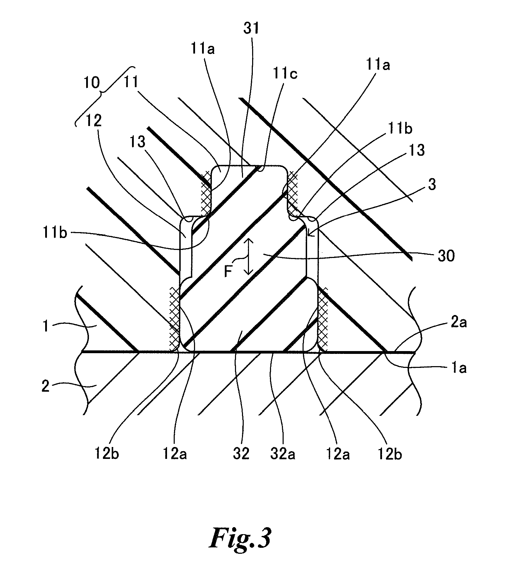

As shown in Fig.2, the intake manifold 1 with the gasket 3 mounted in the groove portion 10 is placed on the surface to be sealed 2a of the cylinder head 2 with the surface to be sealed 1a facing down and is assembled to the cylinder head 2 by fastening a bolt 4. The gasket 3 is compressed in the direction of the depth F in fastening process by the bolt 4, and each portion of the gasket 3 elastically deforms so as to enlarge in the width direction. The insertion portion 31 is tapered in the form of mountain in such a manner that the width is gradually reduced toward the tip end, so that a space is kept in the first groove portion 11 before the gasket 3 is compressed. The insertion portion 31 elastically deforms so as to fill the space of the first groove portion 11 when the gasket 3 is compressed. Therefore, the first groove portion 11 is not over filled even when the gasket 3 is compressed and the insertion portion 31 is uniformly filled in the first groove portion 11 without causing compression inhibition as shown in Fig.3. When the insertion portion 31 leans during compression, the insertion portion 31 abuts the open edge 11b of the first groove portion 11 or the inner wall 11a around the open edge 11b, thereby preventing further leaning.

The projection portion 32 of the main gasket body 30 enlarges in the width direction accompanied with compression in the depth direction F and elastically deforms so as to fill the space in the second groove portion 12. In such a case, the maximum width B of the projection portion 32 is larger than the width A of the main gasket body 30, so that both sides of the main gasket body 30 do not contact or they elastically contact with small force with both inner walls 12a, 12a as shown in Fig.3. When the main gasket body 30 and the projection portion 32 lean during a fastening process, the projection portion 32 abuts the opening edge 12b of the second groove portion 12 or the inner wall 12a around the opening edge 12b, thereby preventing further leaning.

When the intake manifold 1 and the cylinder head 2 are assembled under a fixed fastened-and-united condition as shown in Fig.1 and Fig.3, the gasket 3 is compressed in the groove portion 10. Under such a compressed condition, one end portion including the insertion portion 31 of the main gasket body 30 elastically contacts the inner wall 11 a and the bottom wall 11c of the first groove portion 11. The projection portion 32 elastically contacts the inner wall 12a of the second groove portion 12 and the surface to be sealed 2a of the cylinder head 2. As a result, the surface to be sealed 1a of the intake manifold 1 and the surface to be sealed 2a of the cylinder head 2 are able to be sealed and medium (such as fuel) to swell (deteriorate) the gasket 3 is inhibited from entering the groove portion 10. The internal combustion engine including the intake manifold 1 is used in high-temperature environment, so that the intake manifold 1 constituted with the molded body of synthetic resin easily deforms due to heat. The surface to be sealed 1a of the intake manifold 1 between the fastening bolts 4 becomes floated by such thermal deformation and the space between the surfaces to be sealed 1a, 2a becomes wide. However, the main gasket body 30 does not contact or elastically contacts with small force with both inner walls 12a, 12a of the second groove portion 12, so that the contact area of the gasket 3 with the inner wall of the groove portion 10 does not become the entire area of the gasket 3, as shown with crossed hatching in Fig.3. The gasket 3 obtains restoring elasticity along the depth direction F because of compression. The friction resistance between the gasket 3 and the inner wall 12a of the second groove portion 12 is smaller than the restoring elasticity of the gasket 3. Therefore, the projection portion 32 elastically deforms so as to enlarge toward the surface to be sealed 2a while the space between the surfaces to be sealed 1a, 2a becomes wide. Therefore, elastic contact condition of the lower surface (curved surface) 32a of the projection portion 32 to the surface to be sealed 2a is uniformly kept and sealing performance of the intake manifold 1 and the cylinder head 2 is not deteriorated even when the intake manifold 1 thermally deforms.

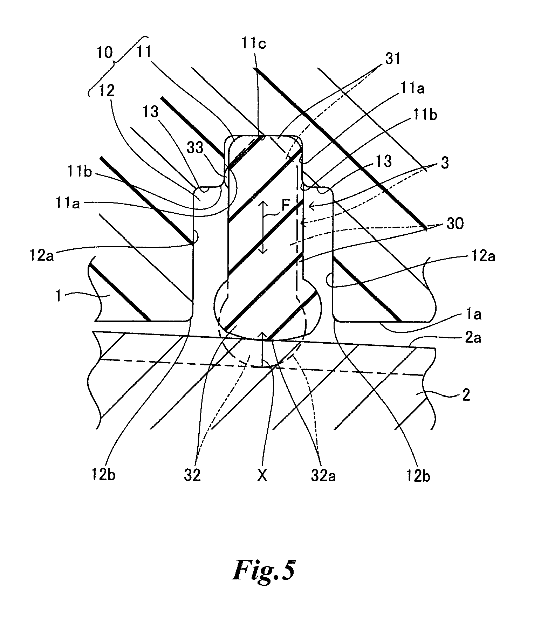

When the intake manifold 1 and the cylinder head 2 are assembled with the gasket 3 interposed, the surfaces to be sealed 1a, 2a are sometimes not parallel, namely the two members are obliquely assembled. In such a case, the direction of fastening force received from the surface to be sealed 2a (the direction perpendicular to the surface to be sealed 2a) is not along the depth direction F. Fig.5 shows how the gasket 3 is compressed when the two members are obliquely assembled. As shown in two-dotted lines in Fig.5, when the cylinder head 2 and the intake manifold 1 are to be assembled under the condition that the surface to be sealed 2a is oblique relative to the surface to be sealed 1a, the gasket 3 receives the fastening force in the direction of the arrow X at a contact portion with the surface to be sealed 2a. The fastening direction X is not along the depth direction F and works as a force to lean the gasket 3. At the start of fastening, the curved surface 32a of the projection portion 32 of the gasket 3 abuts the surface to be sealed 2a in a line contact condition. Then the curved surface 32a soon comes into a surface contact by compression of the projection portion 32 accompanied with fastening because the curvature radius of the curved surface 32a is large. The fastening force is dispersed at the surface contact portion and the force to lean the gasket 3 is practically dispersed, thereby achieving compression by fastening without leaning the gasket 3 at the time of oblique assembly.

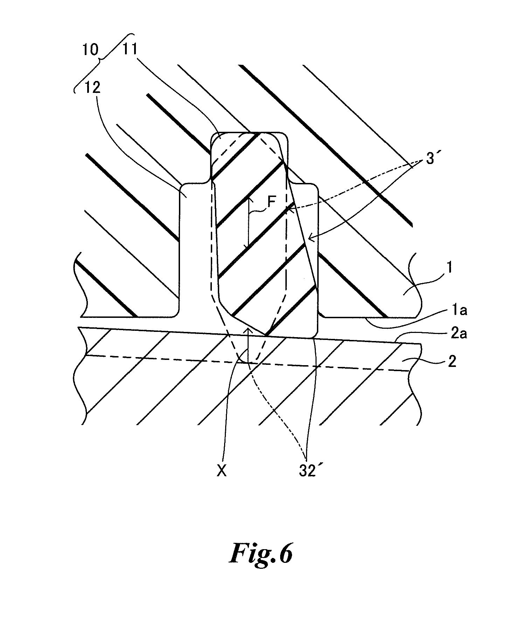

On the other hand, in the comparative embodiment in Fig.6, a portion 32' of a gasket 3' abutting the surface to be sealed 2a is a curved portion with a small curvature radius. Therefore, transition from a line contact condition to a surface contact condition of the portion 32' abutting the surface to be sealed 2a during fastening is so minor that the fastening force in the direction of the arrow X concentrates on the gasket 3' to work as large operation force to lean the gasket 3'. As a result, the gasket 3' easily leans in the groove portion 10 during a fastening process as shown with solid lines in Fig.6.

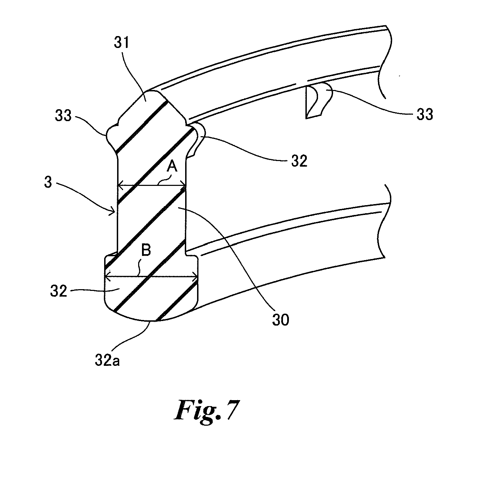

Fig.7 shows another embodiment of the gasket applied to the sealing structure of the present invention. The shape of the projection portion 32 of the gasket 3 of this embodiment is different from that of the above-mentioned embodiment. The projection portion 32 has the curved surface 32a of which section is in the form of the transverse letter D. The projection portion 32 has the maximum width B larger than the width A of the main gasket body 30, has larger curvature radius than that of the above-mentioned embodiment, and is positioned on the side facing the surface to be sealed 2a of the cylinder head 2. The projection portion 32 has the same function as that in the above-mentioned embodiment. Specifically, the curvature radius of the curved surface 32a is large, so that there is no fear of leaning of the gasket 3 at the time of oblique assembly. The other structure of the gasket 3 is the same as that in the above-mentioned embodiment, common portions are allotted with the same reference numerals and the explanation is omitted here.

The shape of the insertion portion 31 of the gasket 3 is not limited to the tapered shape as shown in the figure. The sectional shape of the insertion portion 31 may be rectangular like the main gasket body 30 and an annular projection may be further provided on one end side. The gasket 3 may be formed in such a manner that the height H1 of the gasket main body 30 is equal to the height H2 of the projection portion 32 or the height H2 of the projection portion 32 is larger than the height H1 of the main gasket body 30. As long as the gasket 3 is formed not to be over filled in the first groove portion 11 during compression, the width A of the main gasket body 30 may be determined in such a manner that the width A of the main gasket body 30 may be equal to the width L1 of the first groove portion 11 or may be a little larger than the width L1 of the first groove portion 11. Even if the gasket 3 is thus shaped, the gasket 3 is able to be inserted into the first groove portion 11 when the main gasket body 30 is compressed in the width direction. In the above-mentioned embodiment, the two members 1, 2 are an intake manifold and a cylinder head; however, the sealing structure of the present invention is not limited to the above and may be applied to the sealing structure between a head cover and a cylinder head, to the sealing structure between a water pump case and the mounting portion, to the sealing structure between an oil pan and the mounting portion, or to the sealing structure between other two members. The one member 1, an intake manifold, is constituted with a molded body of synthetic resin in the above-mentioned embodiment; however, both of the two members 1, 2 may be made of metal or of synthetic resin. Furthermore, the position of the gasket 3 where the drop-preventing projections 33 are provided is not limited to the embodiment shown in Fig.4 and may be changed. For example, the drop-preventing projections 33 may be provided on the area except for the insertion portion 31 of the main gasket body 30, specifically on the side surface of the main gasket body 30 facing the inner wall 12a of the second groove portion 12. In such a case, the drop-preventing projections 33 elastically contact both inner walls 12a, 12a of the second groove 12 and prevent the gasket 3 from dropping. The drop-preventing projections 33 are useful in achieving stability of the gasket 3 mounted in the groove portion 10; however, it is not always necessary in the sealing structure of the present invention.

### Reference Signs List

- 1: intake manifold (one member)
- 1a: surface to be sealed
- 10: groove portion
- 11: first groove portion
- 12: second groove portion
- 12a: inner wall
- 2: cylinder head (the other member)
- 2a: surface to be sealed
- 3: gasket
- 30: main gasket body
- 31: insertion portion
- 32: projection portion
- 32a: curved surface
- A: width of main gasket body
- B: maximum width of projection portion
- F: depth direction
- L1: width of first groove portion
- L2: width of second groove portion
- H1: height of main gasket body
- H2: height of projection portion

## Claims

1. A sealing structure for sealing a space between two members by mounting a gasket in a groove portion provided on a surface to be sealed of one member of said two members, wherein:
said groove portion has a first groove portion formed on an inner side in the depth direction and a second groove portion formed on an opening side of said groove portion, said second groove portion being larger in width than said first groove portion and having inner walls facing to each other in substantially parallel;
said gasket having a gasket body having an insertion portion to be inserted in said first groove, and a projecting portion which is larger in width than said gasket body and has a curved portion facing a surface to be sealed of the other member; and
maximum width of said projecting portion is larger than width of said first groove portion and is smaller than width of said second groove portion.

2. The sealing structure as set forth in claim 1, wherein said insertion portion is formed so as to be tapered in such a manner that the width gradually becomes smaller toward the tip end.

3. The sealing structure as set forth in claim 1 or 2, wherein at least one of said two members is made of resin.

4. The sealing structure as set forth in any one of claims 1 to 3, wherein height of said gasket body is larger than height of said projecting portion.

5. The sealing structure as set forth in any one of claims 1 to 4, wherein width of said gasket body is smaller than width of said first groove portion.
